Europäisches Patentamt

European Patent Office

Office européen des brevets

(19)

(11) **EP 1 154 551 A2**

(12) # EUROPEAN PATENT APPLICATION

(43) Date of publication:
**14.11.2001 Bulletin 2001/46**

(51) Int Cl.[7]: **H02K 51/00**

(21) Application number: **01200218.4**

(22) Date of filing: **22.01.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **21.01.2000 NL 1014142**

(71) Applicant: **Rodenhuis, Günther Tillmann
2244 AP Wassenaar (NL)**

(72) Inventor: **Rodenhuis, Günther Tillmann
2244 AP Wassenaar (NL)**

(54) **Dynamoelectric gear**

(57)     The invention relates to a electro dynamic gear
with a driving and a driven shaft. Both shafts are bound
with two around each other free revolving rotors, inside
a fixed stator. One rotor is provided with a rotary current
winding the other is constructed as a squirrel cage. The
stator is provided with a plural rotary current winding.
The rotor- and statorwindings are mutually connected
by plural three-phase inverters. The gear and the invert-
ers are tuned to each other to equal the power density
and the efficiency of one electrical rotary current ma-
chine.

The purpose of the electro dynamic gear is trans-
mitting of constant speed of revolutions to adjustable -
and reversable speed of revolutions, and with this trans-
mission to be able to transmit together with mechanical
-,also electrical power; so to say hybrid power.

-fig. 19-

EP 1 154 551 A2

**Description**

The invention concerns an electro dynamic gear between a driving and a driven shaft, by which the one shaft is provided with a rotary current rotor and the other one with a hollow interrotor, which fits free revolving around the rotary current rotor and free revolving within a fixed rotary current stator and by which means have been provided to transmit electrical power from the rotary current rotor to the rotary current stator or reverse.

Similar gears or transmissions are known from the Dutch patent 103835, the European document EP 0 866 544 A2 fig. 40, the United States patent 3,683,249 and the United States Patent 3,789,281; figures 7 and 8.

With these known transmissions the interrotor is of solid construction of ferro-magnetic material and in- and outwards, to both airgaps provided with windings; and may too conduct magnetism tangentially. The moment of inertia of the interrotor therefore is high; the magnetizing of the applied three-phase windings relatively low;and the efficiency of the transmission low.

Such transmissions are applied where input power at constant speed of revolutions has to be transmitted at variable speed of revolutions.

The invention seeks to provide such a transmission with the equal specific power-density and the equal efficiency of one electric rotary current machine with a stator, and a rotor.

In accordance with the invention this aim can be accomplished in that the interrotor is constructed with as thin a wall as constructive rules permit, added to this only conducts magnetic flux between the stator and the rotary current rotor in radial direction, the rotorwinding is connected via three sliprings with one of, at least three three-phase inverters being connected in parallel, and with that the remaining three-phase inverters are connected to the three-fase windings, at least two of the stator.

The rotary current rotor, the interrotor and the stator of a electro dynamic gear in accordance with the invention can be dimensioned, designed, in regard to numbers of poles, length and diameter relations,in accordance with generally approved rules as with common electric machines.

The interrotor of the gear in accordance with the invention is a cylindrical squirrelcage, short circuit winding type, where the part, that conducts the magnetic flux between the rotor and the stator radially, is made up of bars, chiefly parallel to the length center line, which seen into tangential sense alternately conduct electrical current and then magnetic flux; which are mutually mold together, as well as to the electrical current conducting short circuit rings, eventually with a joint metal.

The interrotor of the gear in accordance to the invention may also be made up of permanent magnets, whether or not within a squirrel cage, mutually glued, eventually enclosed by a thin cylinder or bandage of paramagnetic material.

The stator winding of the gear in accordance to the invention, is made up by at least two three-phase windings, which three-phase windings are made up such, that they have a mutual phase difference of sixty degrees divided by the number of three-phase windings.

The inverters connected in parallel of the gear in accordance to the invention are made up each of a three-phase bridge of gate insulated bipolar transistors, called IGBT's, or Darlington transistors; as where each transistor is connected anti-parallel to a diode.

It is observed, that a request for grant has been made for a similar transmission under application number EP 96 10 1275.4 See also EP 0 725 474 A1. This transmission is also made up with a solid interrotor, which towards both air gaps is provided with windings or with permanent magnets.

The invention will be described by way of an example with reference to the following figures:

Figure 1 illustrates a longitudinal section of an electro dynamic gear in accordance with the invention,
Figure 2 illustrates a wiring diagram of the rotor- and statorwindings of an electro dynamic gear in accordance with the invention, of which two three phase stator windings have a mutual phase difference of thirty degrees, with three inverters having their direct current connections in parallel, with no further specified pulse wave modulators, called PWM.
Figure 3 illustrates a wiring diagram in accordance with fig. 2 with electric currents and IGBT's at a tuned in current.

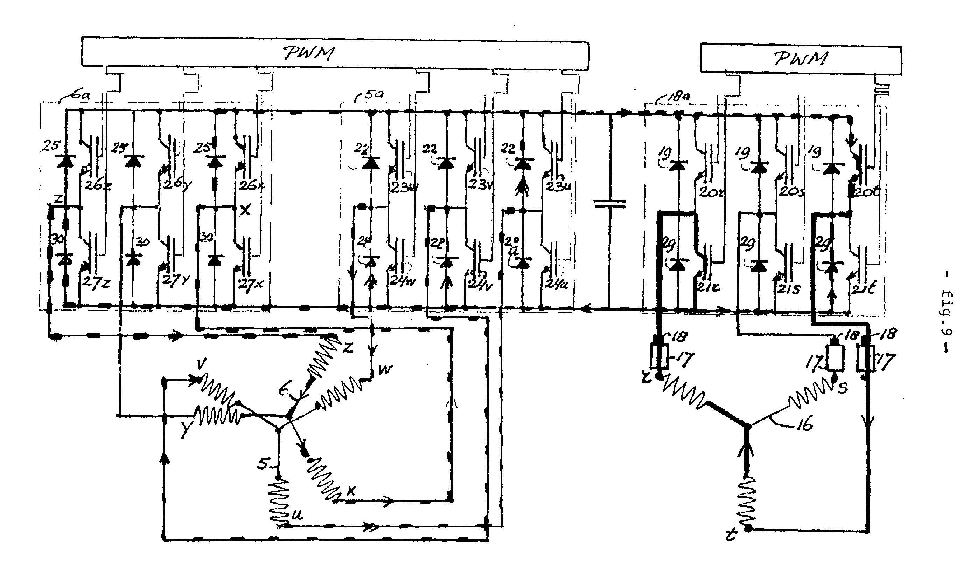

Figure 4 illustrates schematically pulse width's of control voltages, time lapse's and switch moments on IGBT's, in degrees angular speed, in accordance with figures 5, 7, 9, 13 and 15.
Figure 5 illustrates a wiring diagram in accordance with fig. 2 with electric currents and IGBT's at a different tuned in current,
Figure 6 illustrates a vector diagram of magneto motorial forces and the magnetic flux at the different tuned in current of fig. 5,
Figure 7 illustrates a wiring diagram in accordance with fig. 2 with electric currents and IGBT's at another different tuned in current,
Figure 8 illustrates a vector diagram of magneto motorial forces and the magnetic flux at the another different tuned in current of fig. 7,

Figure 9 illustrates a wiring diagram in accordance with fig. 2, with electric currents and IGBT's at a tuned in current different from the currents in accordance with figures 3, 5, 6, 7 and 8,

Figure 10 illustrates a vector diagram of magneto motorial forces and the magnetic flux at a tuned in current in accordance with fig. 9,

Figure 11 illustrates a vector diagram of magneto motorial forces and the magnetic flux at a tuned in electrical current, in accordance with fig. 8,

Figure 12 illustrates a vector diagram of magneto motorial forces and the magnetic flux at a tuned in current in accordance with fig. 10,

Figure 13 illustrates a wiring diagram in accordance with fig. 2, with a no further specified direct current source B, with electrical currents and IGBT's at a tuned in current, with interrotor 7 being driven and rotor 12 driving; of an electro dynamic gear in accordance with fig. 1,

Figure 14 illustrates a vector diagram of magneto motorial forces and the magnetic flux at a tuned in current in accordance with fig. 13,

Figure 15 illustrates a wiring diagram according with fig. 13 with electrical currents and IGBT's at another tuned in current,

Figure 16 illustrates a vector diagram of magneto motorial forces and the magnetic flux at another tuned current in accordance with fig. 15,

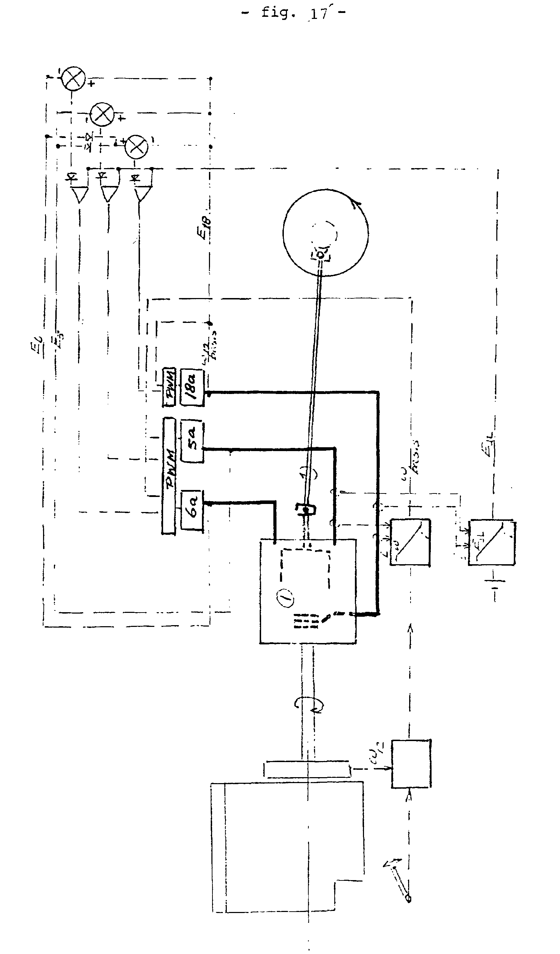

Figure 17 illustrates schematically an application of a vehicle drive system with an electro dynamic gear in accordance with fig. 1.

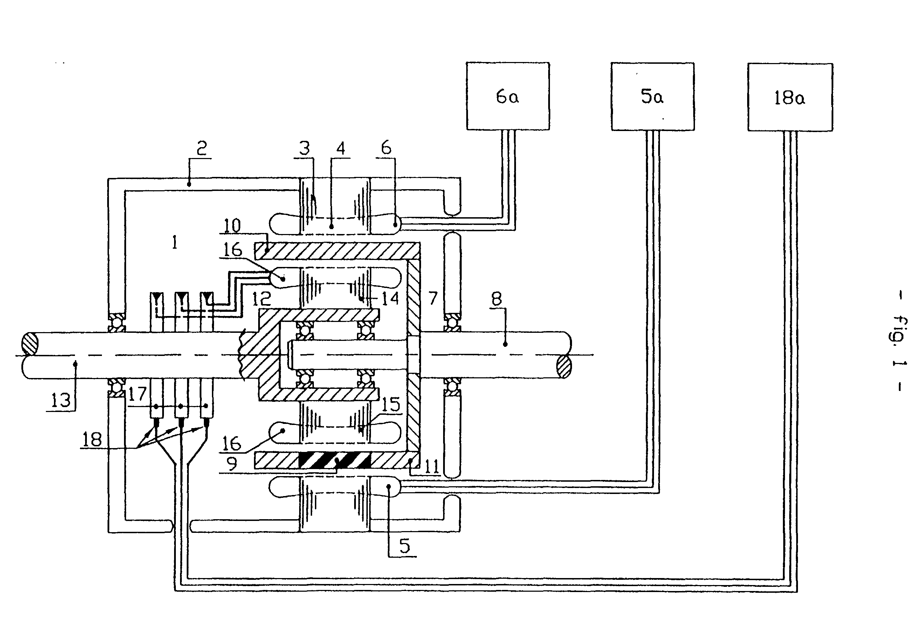

The electro dynamic gear 1, as illustrated in fig. 1 has a fixed stator 2, made up of dynamo sheets 3, with slots 4, in which two three-phase windings 5 and 6 have been mounted. Inside the stator 2 is the interrotor 7 fixed at the shaft 8. The interrotor consists of magnetic conducting bars 9, which are brazed or mold with electrical current conducting bars 10, and with the electrical current conducting rings 11. Within the interrotor 7 is the rotor 12 fixed at the shaft 13, which rotor 12 consists of dynamo sheets 14, with slots 15, where-in a three-phase winding 16 has been mounted, which is connected, electrically to three sliprings 17. Both rotors 7 and 12 can rotate freely to each other and to the stator 2. Fast mounted brushes 18 contact the sliprings 17.

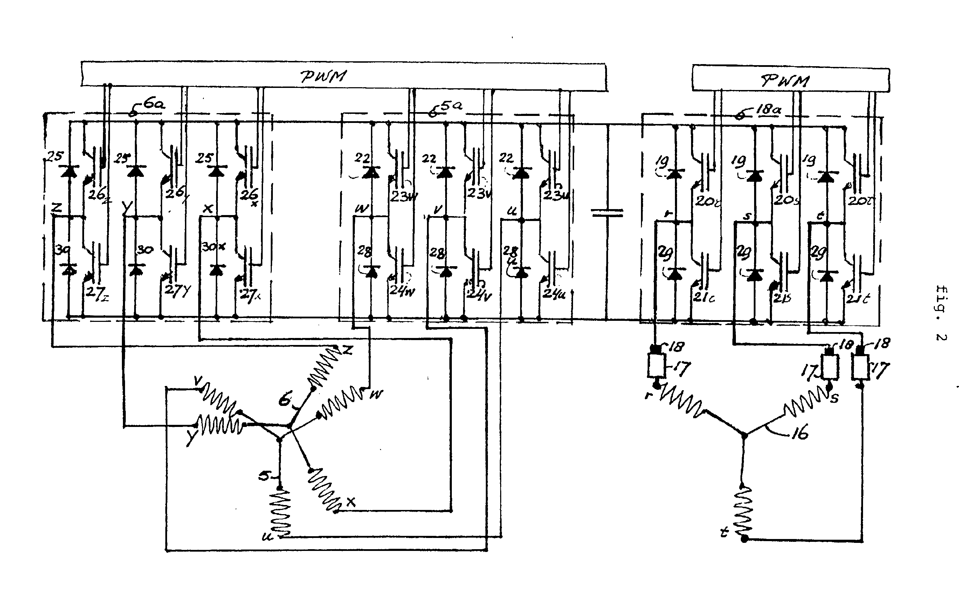

In the circuit diagram as illustrated in fig.2, the brushes 18 are connected to the three-phase bridge inverter 18a, which is made up of IGBT's 20, antiparallel with diodes 19, and IGBT's 21, antiparallel with diodes 29. The three phases are indicated with r, s and t.

The statorwinding 5 is connected to the three-phase bridge inverter 5a, made up of IGBT's 23, antiparallel with diodes 22, and IGBT's 24, antiparallel with diodes 28. The three phases are indicated as u, v and w.

The statorwinding 6 is connected to the three-phase bridge inverter 6a, made up of IGBT's 26, antiparallel with diodes 25, and IGBT's 27, antiparallel with diodes 30. The three phases are indicated as x, y and z. With an electro dynamic gear 1, as illustrated in fig. 1, all phases r, s, t, u, v, w, x, y and z have the equal number of -coil- windings.

Operation now will be explained by the example, that the phases u and v of statorwinding 5 are connected to rotorwinding 16, if by PWM control voltage IGBT 23u and IGBT 24v both can transmit current. When the rotor 12 is mechanically driven by a prime mover, slight electro motorial force will be induced in the rotorwinding 16, due to remanent magnetism slightly present in a magnetic circuit. This electro motorial force, E.M.F., will build up a slight three phase voltage in winding 16, via sliprings 17 and brushes 18 to the diodes 19 and 29, and by them a slight D.C. voltage over the series connected IGBT 23u, the fase u of winding 5, the fase v of winding 5 and the IGBT 24v. This D.C. voltage gives rise to a slight direct current in the phases u and v of winding 5, that makes the E.M.F. of winding 16 to increase. Just like with any electric machine, that magnetizeses itsself, electric current and magnetic flux will build up, which can be controlled by controlling IGBT 23u with modulated voltage and IGBT 24 with continuous voltage, a chopper circuit with diode 28u free wheeling current.

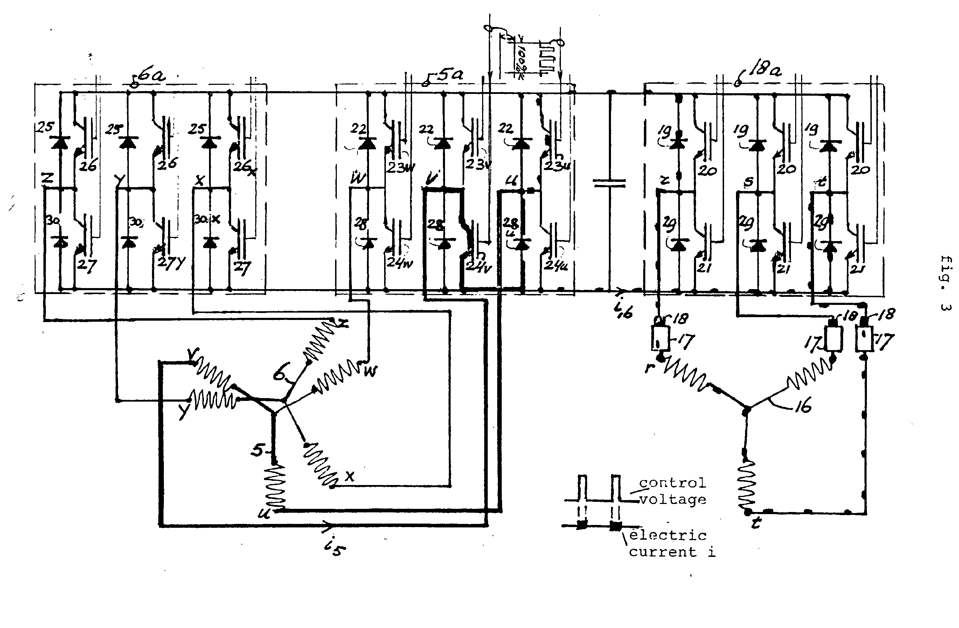

In fig. 3 with this explanation, current pulses are illustrated as broken lines; $i_{16}$ ———— , and continuous current as drawn, thick lines; $i_5$ ————— , by means of a modulated control voltage applied to IGBT 23u, as blocks like ⊓⊔⊓.

The above explanation is also appropriate, by for instance controlling IGBT 26x with modulated voltage and IGBT 27y continuously, with diode 30x free wheeling. Or for example IGBT 21t with modulated voltage and IGBT 21r continuously, with diode 29t free-wheeling.

When or if the rotor 12 is driven, so to say rotates with regard to the stator 2, the electro dynamic gear will magnetize itsself. When the interrotor 7 is driven the electrodynamic gear will magnetize itsself if the rotor 12 rotates.

The electro dynamic gear magnetizes itsself when the PWM's control cycle-wise with phase difference of 30 degrees, in sequence the IGBT's 26x, 23u, 27z, 24w, 26y, 23v, 27x, 24u, 26z, 23w, 27y and 24v, by which the control cycle on each IGBT will be less than 180 degrees to the 360 degrees of electric angular speed, and by which per phase-current one IGBT will be controlled with shorter pulses than controlled to the other IGBT; in this case, magnetizes with rotary current.

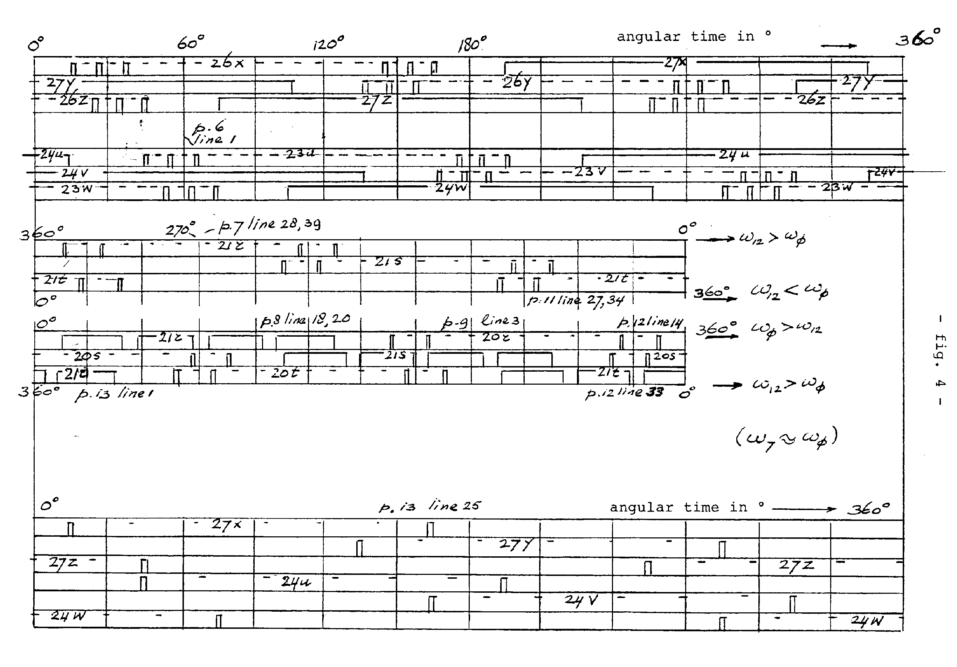

Fig. 4 illustrates short pulses, small relative pulsewith as ⨅⨅⨅⨅ , and longer pulses, more relative pulsewith as ⨆‾‾‾‾‾⨆; as being controlled by PWM to IGBT.

Operation of the electro dynamic gear will be explained with rotary current in clockwise direction, the rotor 12 being driven by a prime mover with angular speed $\omega_{12}$ clockwise, with PWM controlled angular speed clockwise $\omega_{\emptyset}$, in which case of explanation $\omega_{\emptyset}$ is less than $\omega_{12}$ divided by two.

Fig. 4 illustrates, that for instance at point of time at 60 degrees, IGBT's 26x, 23u and 23w get small relative pulsewidth from -,and IGBT's 27y and 24v get more relative pulsewith control from the PWM.

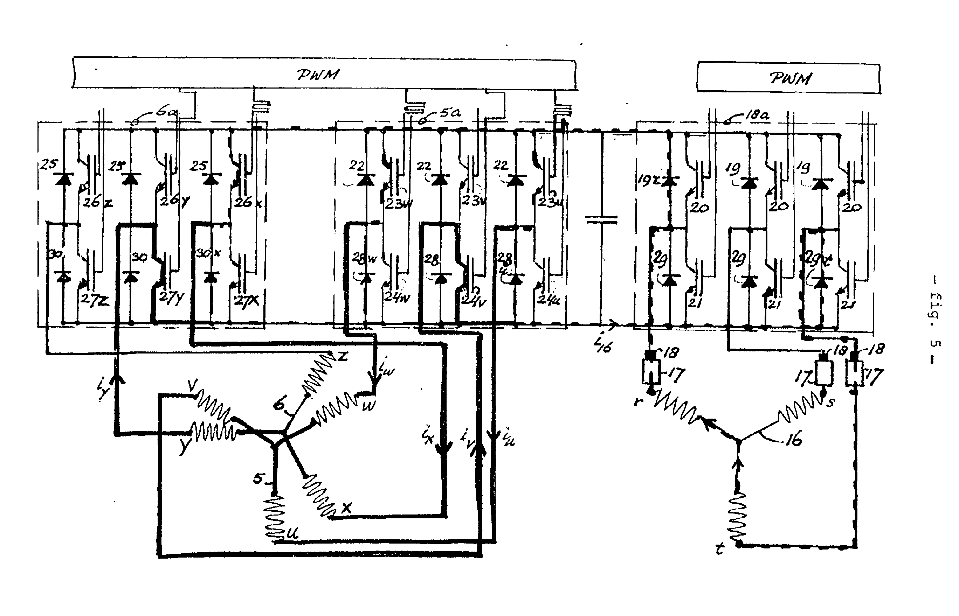

See fig. 5. In the windings 16 of the driven rotor 12 E.M.F. will be induced, that give rise to electrical currents via the sliprings 17, the brushes 18, the diodes 19r and 29t, the IGBT's 26x and 27y, the IGBT's 23u,23w and 24v in the phases x, y, u, v and w of the statorwindings respectively 6 and 5, and in the diodes 30x,28u and 28w; at the point of time 60 degrees from fig. 4. These electrical currents, $i_x$ and $i_y$, $i_u$, $i_v$ and $i_w$ in the windings 6 and 5 cause magneto motorial forces respectively $AW_6$ and $AW_5$; as $i_r$ and $i_t$ also do in the rotorwinding 16 $AW_{16}$.

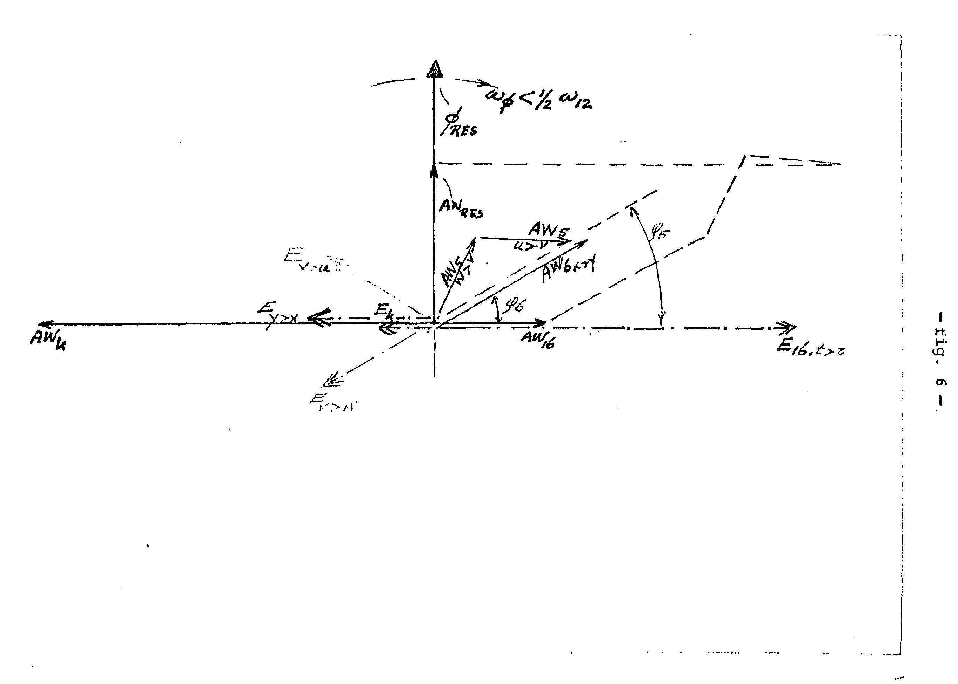

PWM control as illustrated in fig. 4, as so illustrated in fig. 6 cause phase differences between $AW_{5.w>v}$ and $AW_{6.x>y}$, also between $AW_{6.x>y}$ and $AW_{5.u>v}$; of 30°, all rotating at $\omega_{\emptyset}$ .

The squirrel cage winding,as illustrated in fig.1;bars10 and rings 11 of the interrotor 7, will induce E.M.F. in case of a rotating magnetic flux, giving rise to the current $i_k$, which causes $AW_k$, pushing the interrotor 7 to rotate the same angular direction.

The magneto motorial forces $AW_6$, $AW_5$, $AW_{16}$ and $AW_k$ result in -vector- $AW_{RES}$.

As illustrated in fig. 6 $AW_{RES}$ causes the magnetic flux Ø, that rotates clockwise at angular speed $\omega_{\emptyset}$, as given by the PWM.

The magnetic flux ø induces the E.M.F.'s as been explained from page 6 line 21.

If the interrotor 7 drives a mechanical load via the shaft 8, a certain value of the current $i_k$, and also of $AW_k$ will rise, sufficient to carry on the torque, that will drive this load. This value of $i_k$ and $AW_k$ will give rise to certain value's of $AW_6$, $AW_5$ and $AW_{16}$. See fig.4 : There is a ratio of controlled pulsewidth modulation to the IGBT's 26x and - 23u, as to the modulation to IGBT's 27y and -24v; shorter-as to longer pulses, which ratio reproduces into the value of $AW_{16}$ as to the value's of $AW_6$ and $AW_5$.

The stator 2 and the rotor 12 both carry a certain torque value on the interrotor 7; value that is proportionate to respectively the magneto motorial forces $AW_6$ multiplied by cos. $\varphi_6$ and $AW_5$ - by cos. $\varphi_5$, and $AW_{16}$, all three together multiplied by the magnetic flux ø, as illustrated in fig. 6. No mechanical load on the interrotor corresponds with the mean value of $\varphi_5$ and $\varphi_6$ is in principle 90°. The electro dynamic gear then magnetizes itsself.

Pulse width control on IGBT's 26x and -23u , with regard to the same on IGBT's 27y and -24v , controls currents and angular speed $\omega_{12}$ with regard to $\omega_7$ up to $\omega_7$ is half $\omega_{12}$.

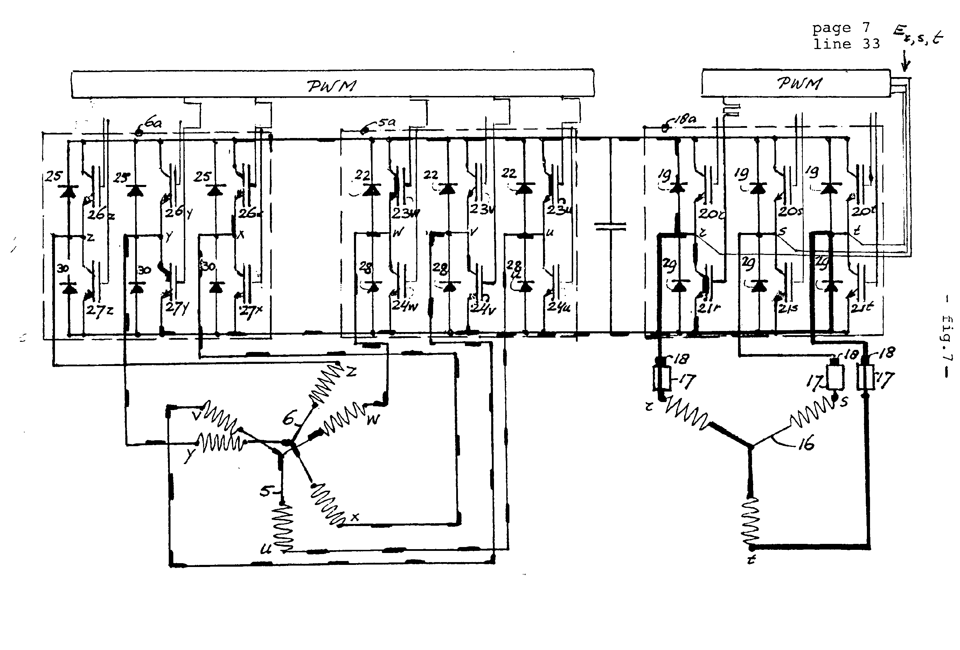

If the angular speed $\omega_7$ is higher than half $\omega_{12}$, current control is, by PWM-control of the IGBT's 21r, 21s and 21t of the inverter 18a, as illustrated in figures 7 and 4 ; by which then all IGBT's 26, 23, 27 and 24 are being controlled the same way, by basic frequency $\omega_{\emptyset}$ to the inverters 6a and -5a.

The PWM, that controls the inverter 18a modulates on the rotary voltage, as input, from the phases r, s and t. If the angular speed $\omega_{12}$ is higher than $\omega_{\emptyset}$, the magnetic flux ø rotates anti-clockwise in regard to the rotor 12, as illustrated in fig. 4 angular time moving from 360° to the right to 0°.

The angular speed of input to the PWM rotary voltage from the phases r, s and t reverses at $\omega_7$ plus or minus its small slip angular speed, like of any rotary current asynchronous electrical machine,is equal to $\omega_{12}$ ; somewhere about $\omega_7 \approx \omega_{12}$.

Fig. 7 illustrates IGBT 21r being PWM controlled, as illustrated in fig. 4 at 270° angular time,with pulse modulations. These may give rise to pulsating currents $i_x$, $i_y$. $i_u$, $i_w$, $i_v$, $i_r$ and $i_t$, and moreover, while the phases r and t are also pulse short circuited to electrical currents $i_{16.k}$, which give rise to the magneto motorial force $AW_{16.k}$. The electrical currents $i_r$, $i_t$ and $i_{16.k}$ together form an uninterrupted current in the phases r and t. For reason of explanation these currents are described and illustrated separately. Small pulsewidth control voltage applied to the IGBT 21r gives a small value of the electrical current $i_{k.16}$ , also of the magneto motorial force $AW_{16.k}$; by which the sum of magneto motorial forces $AW_{16.k} + AW_{16}$ , the latter being given rise to by $i_r$ and $i_t$, is increased being compared with $AW_5 + AW_6$. More extended pulsewidth's to this IGBT gives more rise to the magneto motorial force $AW_{16.k}$. Principally at 270° angular time - see line 6 of this page - 100% pulsewidth of control voltage applied to IGBT 21r makes $i_5 = i_6 = AW_5 = AW_6 = 0$. To keep up the magneto motorial force $AW_{RES}$ at this angular time with this 100% pulsewidth,or nearly 100% -, the IGBT 20t is controlled by PWM voltage of small pulsewidth. With a control situation from above at 270° angular time, fig. 7 passes into fig.'s 9 and 10.

See page 7, line 18; with a ratio of proportion - electric machine ratio - being $c_1$, the torque being exercised by the stator 2 upon the interrotor 7 is :

$$M_2 = c_1 \times \emptyset_{RES} \times (AW_5 \times \cos \varphi_5 + AW_6 \times \cos \varphi_6)$$

With a control situation as above at 270° angular time this torque is :

$$M_2 = 0, \text{ because } AW_5 \times \cos \varphi_5 + AW_6 \times \cos \varphi_6 = 0$$

With this same situation the torque exercised upon the interrotor 7 by the rotor 12 is :

$$M_{12} = c_1 \times ( AW_{16} + AW_{16.k}) \times \emptyset_{RES} = M_7 , AW_{16} \approx 0.$$

In the wiring diagram and the vector diagram illustrated in fig.'s 9 and 10, the interrotor angular speed $\omega_7$ equals or exceeds the rotor angular speed $\omega_{12}$. The stator 2 operates as a' generator, by what $M_2 < 0$, as the rotor 12 functions as motor with $\omega_{RES} > \omega_{12}$. The sequence of rotary voltage input to the PWM is r - s - t. $\omega_7$ may become much more than $\omega_{12}$, with pulse modulation of the PWM control voltage to IGBT 20r at the angular time described above, as to IGBT's 20s and - 20t as illustrated in fig. 4 at different times, going up to 100%.

Electro dynamic machines in combination with power electronics may show non unanimous angular speed of magneto motorial forces. As with rotor 12 of the electro dynamic gear 1 the magneto motorial force $AW_{16}$ illustrated by $AW_{16}$ as pointed out in the fig.'s 6, 8, 10, 14 and 16, in reality rotates at average angular speed $\omega_{\emptyset RES}$, by over and over again principally 60° time rotating at $\omega_{12}$ angular speed of the rotor 12, then changing to $\omega_{\emptyset RES}$, then changing to $\omega_{12}$, etc. ; because of the electrical current pattern in the windings 16 changing at every 60° in time. This gives rise to non uniform rotational speed of the magneto motorial forces $AW_{16}$ and of the magnetic flux $\emptyset_{RES}$, that make higher harmonic current losses and less specific power capacity.

The electro dynamic gear according to the invention seeks to provide against these losses, to improve efficiency by mounting the statorwindings 5 and 6 with a spatial difference of 30°, and having these windings connected in parallel via the inverters 5a and 6a.

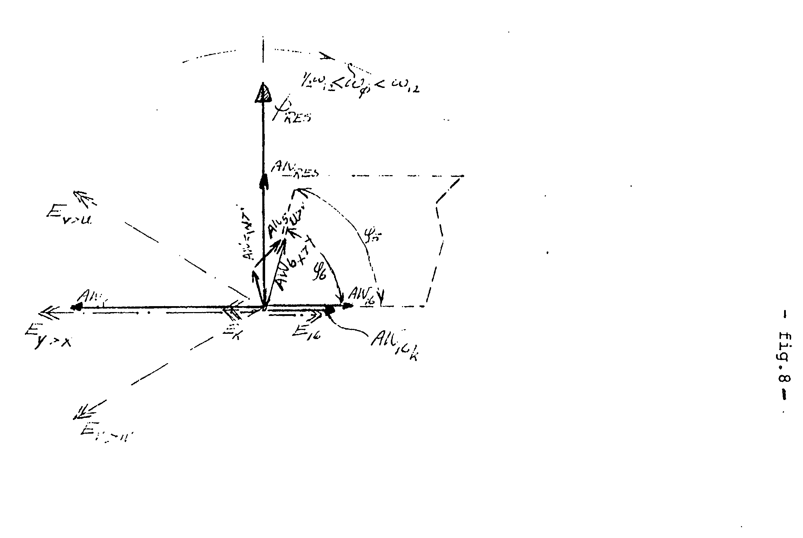

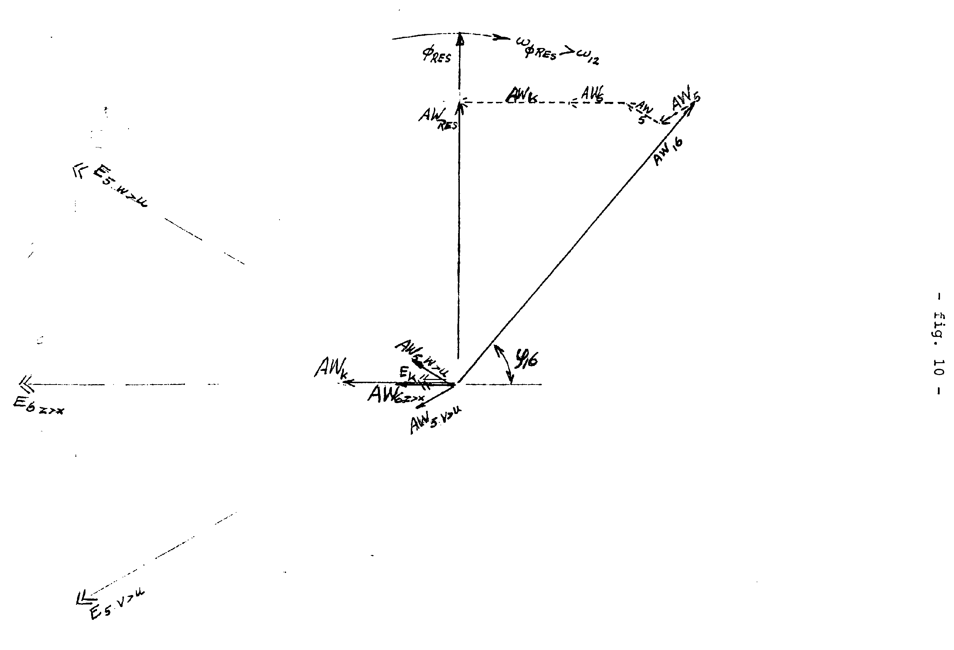

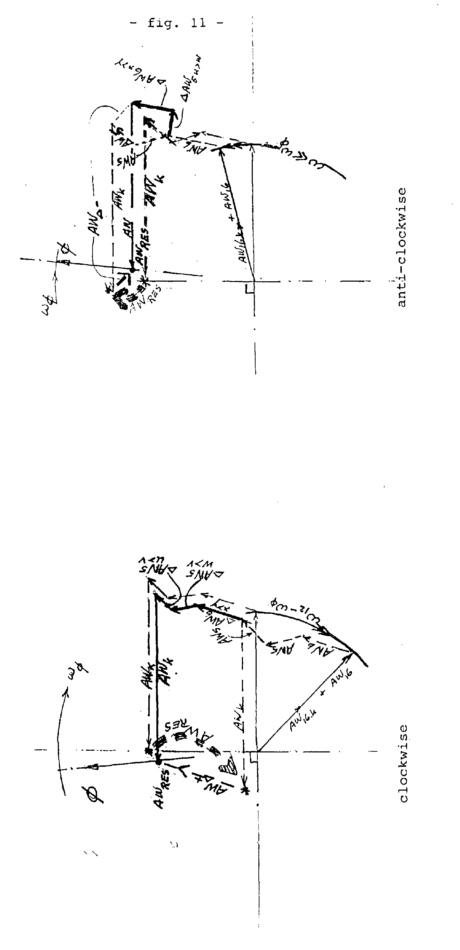

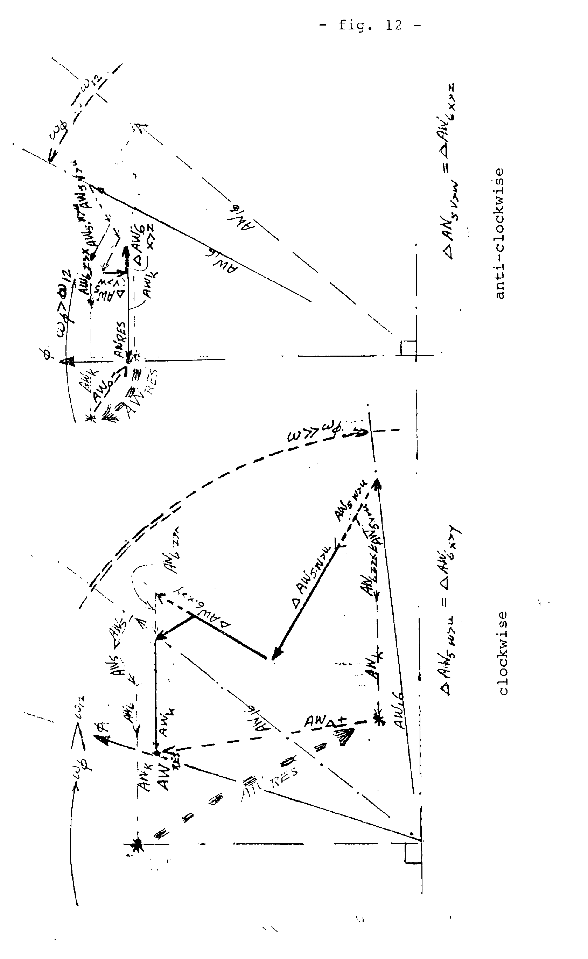

According to LENZ' law a change of electrical current $i_{16}$ may give rise to a secondary current that counteracts this change. This counteracting current may rise if there will be the adequate circuit for it. Fig. 11 illustrates the vectors $AW_{16}$ and $AW_{16.k}$ of fig. 8 and fig. 12 illustrates the vectors $AW_{16}$ of fig. 10. Both figures 11 and 12 show angular speeds changing 60°. In both these figures is illustrated the change over of the vector $AW_{RES}$ between $AW_{RES.0°}$ and $AW_{RES.60°}$; by vague broken line arrows indicated $AW_{RES}$. Illustrated in these figures 11 and 12 is $AW\Delta$, the magneto motorial force being given rise by electrical currents opposing the change over of $AW_{RES}$, which currents develop from a changing current pattern in the windings 5 and 6, because these windings are connected in parallel via the inverters 5a and 6a.

As illustrated in fig. 11 the vectors $AW_{16}$ and $AW_{16.k}$ change over clockwise and the vector $AW_{RES}$ changes, also decreases to *. To LENZ' law electrical currents may develop in the circuit winding 6, phase x and y, diode 25y, IGBT's 23u, 24v and 23w, diode 30x, and winding 5 phases u and v; which may give rise to the magneto motorial forces :

$$\Delta AW_{5\ u>v}, \Delta AW_{5.w>v} \text{ and} \Delta AW_{6.x>y}.$$

With mutual relations :

$$\Delta AW_{5.u>v} + \Delta AW_{5.w>v} = \Delta AW_{6.x>y},$$

and the opposing magneto motorial force :

$$AW\Delta^+ = \Delta AW_{5.u>v} + \Delta AW_{5.w>v} + \Delta AW_{6.x>y}$$

Also illustrated in fig. 11 these vectors $AW_{16}$ and $AW_{16.k}$ change over anti clockwise, with the vector $AW_{RES}$ changing and increasing to *. As explained above an opposing magneto motorial force may develop in the circuit winding 5, phases u and w, diode 22w, IGBT's 26x and 27y, winding 6, phases x and y and diode 28u; $\Delta AW_{5.u\ w}$ and $\Delta AW_{6.x\ y}$, with relationship,

$$\Delta AW_{5.u\ w} = \Delta AW_{6.x\ y} ;$$

$$AW \Delta^- = \Delta AW_{5.u\,w} + \Delta AW_{6.x\,y}.$$

In the illustrations 11 and 12 the + or - next to means that the opposing force increases or decreases the effect of change-overs.

Illustration 11 relates to the stator 2 of the electro dynamic gear 1, functioning as electric motor.

Illustration 12 relates to the same as electric generator. See fig.12: the vector $AW_{16}$ changes over clockwise and the vector $AW_{RES}$ changes, also decreases to *. As explained above an opposing magneto motorial force may develop in the circuit winding 5, phases w and u, diode 22u, IGBT 26x, winding 6, phases x and y, IGBT 27y and diode 28w; $\Delta AW_{5.u\,w}$ and $\Delta AW_{6.x\,y}$ with relationship $\Delta AW_{5.u\,w} = \Delta AW_{6.x\,y}$ ;

$$AW \Delta^+ = \Delta AW_{5.u\,w} + \Delta AW_{6.x\,y}.$$

Also illustrated in fig. 12 the vector $AW_{16}$ changes over anti clockwise, with vector $AW_{RES}$ changing and increasing to*. As explained above an opposing magneto motorial force may develop in the circuit winding 5, phases v and w, diode 22w, IGBT 26x, winding 6, phases x and z, IGBT 27z and diode 28v; $\Delta AW_{5.v\,w}$ and $\Delta AW_{6.x\,z}$, with relationship,

$$\Delta AW_{5.v\,w} = \Delta AW_{6.x\,z} ;$$

$$AW \Delta^- = \Delta AW_{5.v\,w} + \Delta AW_{6.x\,z}.$$

The effect, based on LENZ' law of compensating currents takes place between the inverters 5a and 6a, the currents being via controlled IGBT's of one inverter and via diodes of the other inverter; their distribution depends of, is given rise to, the electro motorial forces, being induced by the electrical currents conform to LENZ'law.

The working method of an electro dynamic gear in accordance with fig. 1 can be reversed. The driven shaft by a prime mover then is shaft 8 of the interrotor 7, the mechanically driving shaft is then shaft 13 of the rotor 12. Shaft 8 being driven makes shaft 13 transmitting power with variable angular speed $\omega_{12}$. The angular shaft speed $\omega_7$ of the shaft 8 of the interrotor 7 determines principally the angular speed of the magnetic flux vector $\omega_\emptyset$ , which is $\omega_7$ plus or minus the electrical slip that gives rise to the electrical current $i_k$ in the squir-cage winding 10 and 11. The PWM controlling both inverters 5a and 6a receives its rotary voltage inputs by the electro motorial forces being induced in the stator windings 5 and 6 with the angular speed $\omega_\emptyset$. This PWM ('s)controlling, with phase sequence and pulse duration is explained at page 7, line 28 up to line 33, however identically (un)modulated to all IGBT's of the inverters 5a and 6a. The IGBT's of the inverter 18a are modulated PWM voltage controlled, as explained at page 7 , line 33 up to page 8 , line 4 . See also fig. 4.

With the explained reversed working method controlled angular speed $\omega_{12}$ of the rotor 12 is to be obtained by way of modulated PWM voltage to the IGBT's of inverter 18a. The working method as like it has been explained at page 8,lines 5,10 and 20; however now the interrotor 7 being driven with angular speed $\omega_7$ higher than the speed $\omega_{12}$ of the rotor 12. If $\omega_7 > \omega_{12}$, the angular speed $\omega_{12}$ relative to $\omega_7$, can be controlled-tuned in - by controlling the IGBT's of inverter 18a with voltage modulations.

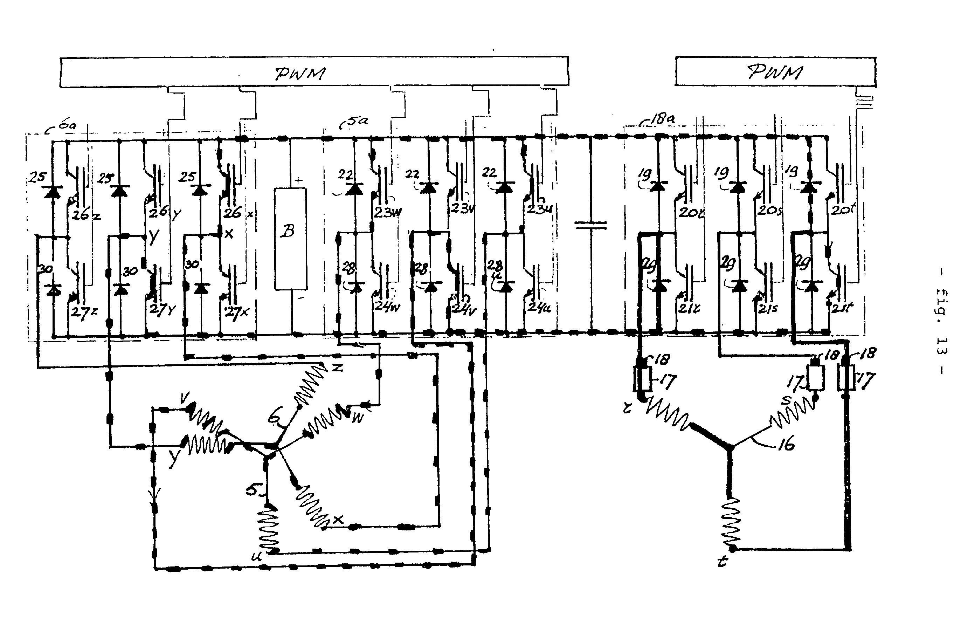

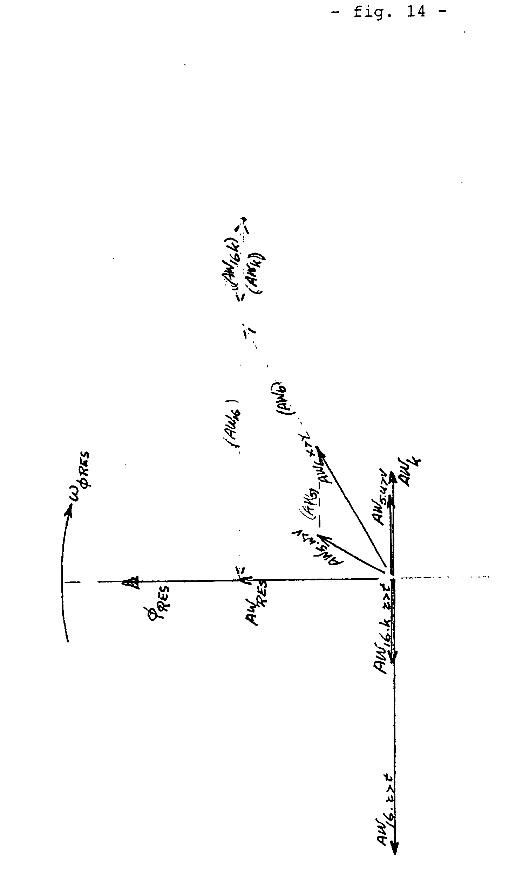

Fig. 13 illustrates a wiring diagram in accordance with fig. 2 with electrical currents and IGBT's at a tuned in current. Fig. 14 illustrates the vectors of magneto motorial forces and magnetic flux in accordance with the tuned in value of fig. 13. An increase of modulation of voltage to IGBT21t gives increase of the short circuit current $i_{16.k}$. When the sum of the electrical currents $i_{16}$ and $i_{16.k}$ with $AW_{16}$ and $AW_{16.k}$ principally remains equal, then the currents $i_{16}$ with magneto motorial forces $AW_{16}$, and also respectively $i_5$ and $i_6$ with $AW_5$ and $AW_6$ decrease simultanuously with increase of $i_{16.k}$.

The torque $M_{12}$ transmitted by the rotor 12 to the shaft 13 is the sum of the by the interrotor 7 from the shaft 8 magnetically transmitted torque plus the by the stator 2 magnetically transmitted torque, $M_7 + M_2$, both by the magnetic flux $\emptyset$, being given rise to by the magneto motorial forces $AW_{16}$, $AW_{16.k}$, $AW_5$ $AW_6$ and $AW_k$. The relationship between them is:

$$M_{12} = c_1 \times AW_k \times \emptyset_{RES} + c_1 \times ( AW_5 \times \cos\varphi_5 + AW_6 \times \cos\varphi_6) \times \emptyset,$$

and

$$M_{12} = c_1 \times (AW_{16} + AW_{16.k}) \times \emptyset$$

If $AW_5$, $AW_6$ and $AW_{16}$ approach to 0 or nearly to 0 by 100% or nearly 100% short circuit effect-given rise through IGBT 21t, magnetising the electro dynamic gear 1 may be maintained by, for instance control -by the PWM-IGBT20s with small pulsewidth modulation.

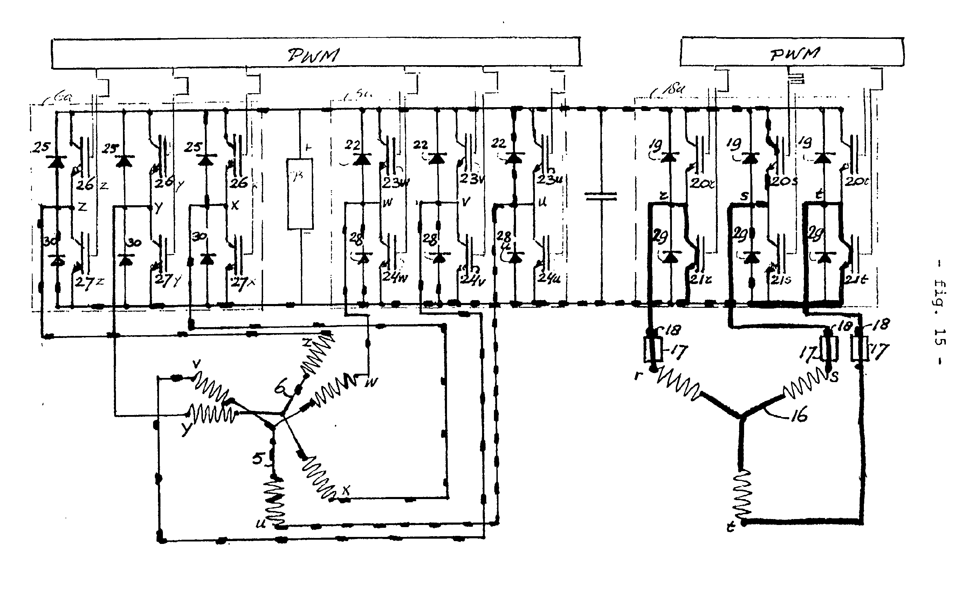

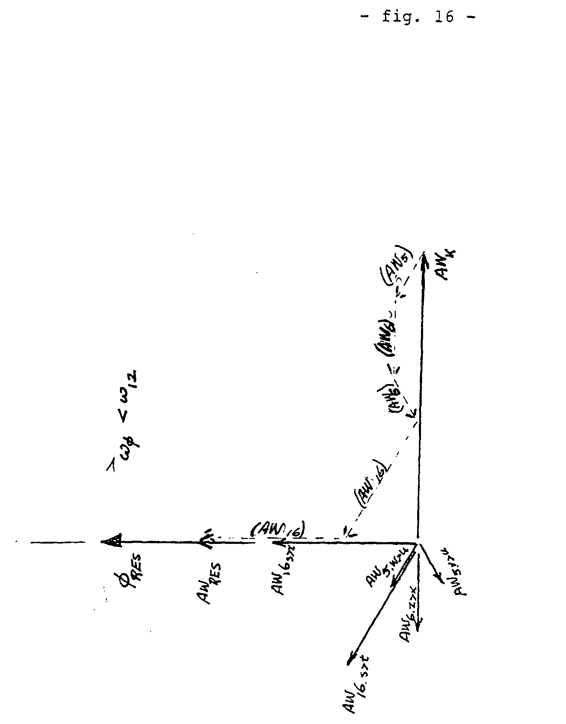

With control voltage modulations of IGBT 21t $\leq$ 100% and the same of IGBT 20s $\gtrsim$ 0%, both $\cos \varphi_5 \approx 0$ and $\cos \varphi_6 \approx 0$, and the torque values $M_7$ for the interrotor 7 and $M_{12}$ for the rotor 12 principally equal; $M_{12} \approx M_7$, and the angular speeds $\omega_{12} \approx \omega_7$. The currents illustrated in fig. 13 pass into the currents illustrated in fig. 15; the vectors illustrated in fig. 14 pass into the one's of fig. 16; both illustrate an angular turn of angular speed of 30° by choice of IGBT 20s for explanation. See line 17 of this page.

Fig. 13 and fig. 15 both illustrate a no further specified direct current voltage source B, that may give rise to the magnetising current in th electro dynamic gear. This direct current voltage source may be either discharged or charged by the electro dynamic gear according to the invention.

If the pulsewidth modulation of PWM control voltage to IGBT 20s increase, from almost 0% up to nearly 100%, principally the angular speed $\omega_{12}$ of the rotor 12 becomes higher than $\omega_7$ of the interrotor 7. Fig. 15 illustrates a wiring diagram according to fig. 2, with a tuned in current, given rise by pulse-modulating control voltage to IGBT 20s at modulations between 0% and 100% - 0%<100% -, and with 100% modulations to both IGBT's 21t and 21r, with fig. 16 illustrating a vectordiagram according to fig. 15. The stator 2 functions as electrical generator, by which the in the windings 5 and 6 being induced electro motoric forces give rise via the diodes 25 and 27 of inverter 6a and via the diodes 22 and 28 of inverter 5a, via the IGBT's 20s, 21r and 21t, via the brushes 18 and the sliprings 17 of electrical currents in the windings 16 of the rotor 12. Because of the less modulation of PWM voltage control to the IGBT 20s, compared to those being controlled to the IGBT's 21r and 21t these mentioned currents, $i_{16}$, give rise to the magneto motorial forces $AW_{16.s>r}$ and $AW_{16.s>t}$ which point about between 90° and 180° anti clockwise with respect to the in the rotorwindings 16 induced electro motorial forces $E_{t\,r}$ and $E_{t\,s}$, which means that the rotor 12 functions as electrical motor. The angular speed $\omega_{12}$ of rotor 12 is higher than the same of the interrotor 7; $\omega_{12}>\omega_7$, with which the torque rotor 12 carries on to the shaft 13 is less, then the torque the interrotor 7 is driven with by the shaft 8: $M_7 > M_{12}$, because of the relationship;

$M_{12} = c_1 \times AW_k \times \emptyset + c_1 \times (AW_5 \times \cos \varphi_5 + AW_6 \times \cos \varphi_6) \times \emptyset$, with $\cos \varphi_5$ and $\cos \varphi_6$, both being negative, and $M_7 = c_1 \times AW_k \times \emptyset$.

The electro dynamic gear 1 according to the explanation from page 6, line 1 , may also transmit power from a driven shaft by a driving shaft with reversed angular speeds. The principle of input of basic rotary voltage to the PWM controlling the inverters 5a and 6a is as being explained at page 6, line 5; as to the PWM controlling the inverter 18a, as being explained at page 11 line 23-37. With reversed angular speeds control of $\omega_{12}$, the latter, in accordance with fig. 13, principally is by controlling the IGBT's of the inverters 5a and 6a, as done to inverter 18a, to control $\omega_{12}$ when $0 < \omega_{12}<\omega_7$. The said control of $\omega_{12}<0$ is illustrated in fig. 4.

A second example of an electro dynamic gear in accordance with the invention will be described in what follows with reference to the following figures:

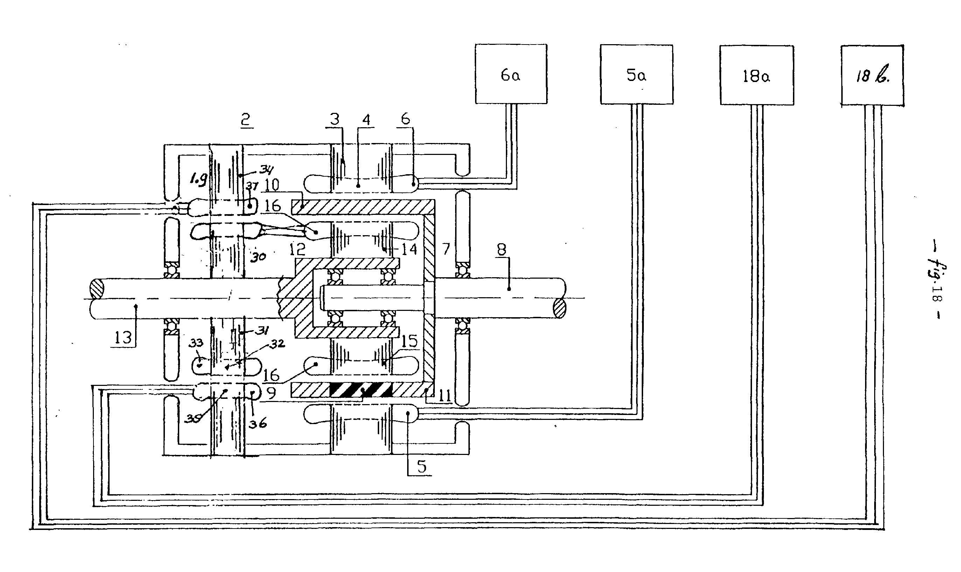

Fig. 18 illustrates a longitudinal section of a second example of an electro dynamic gear according to the invention,

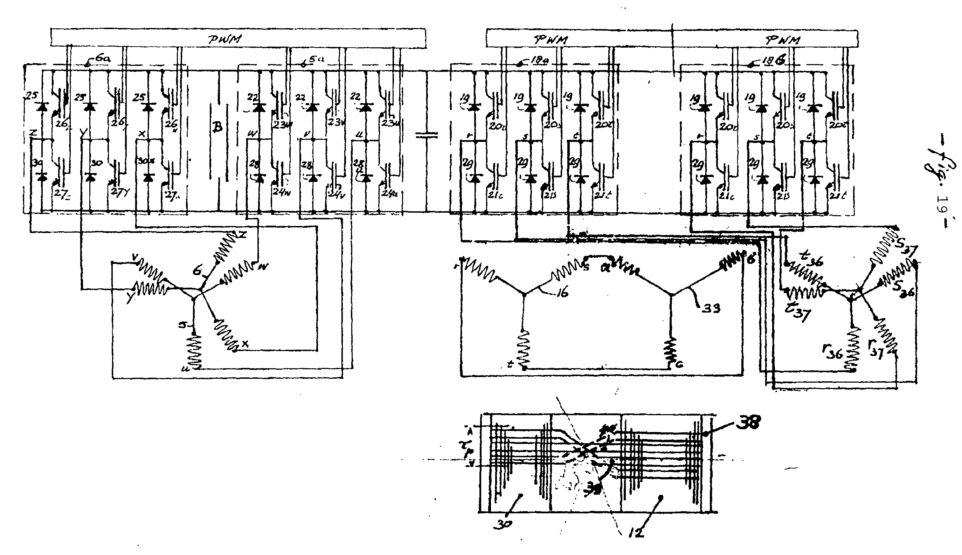

Fig. 19 illustrates a wiring diagram of the rotor- and statorwindings of an electro dynamic gear in accordance with the invention and in accordance with fig.18 , of which with both stator windings two rotary current windings have a mutual spatial difference of 30°, connected with four, at direct current connections sides,in parallel connected inverters, with no further specified PWM's.

The difference between the example of an electro magnetic gear 1 as illustrated in fig.1 and the example of an electro magnetic gear 1.9 as illustrated in fig. 18 , is,that in place of the three sliprings 17 and the three brushes 18 - fig. 1 -, there have been mounted - fig. 18 - on the shaft 13 the rotor 30,and in the stator 2 dynamo sheets 34 with slots 35,where-in mounted two rotary current windings 36 and 37. The rotor 30 is made up of dynamo sheets 31, with slots 32, in which are mounted the rotary current windings 33. The phases of the windings 33 are a, b and c. The stator windings 36 and 37 have respectively the phases $r_{36}$, $s_{36}$ and $t_{36}$; and $r_{37}$, $s_{37}$ and $t_{37}$.

The dynamo sheets 34 together form a magnetic stator circuit, in which the rotor 30 can rotate freely, in such way that this stator yoke of dynamo sheets 34 with the windings 36 and 37 together with the rotor 30 with the windings 33 forms an electrical rotary current machine.

The phases a, b and c of the windings 33 are firmly connected with the phases r, s and t of the windings 16, in such way that, if rotary current flows in both windings 33 and 16, the magneto motorial force $AW_{33}$, being given rise to by the currents $i_a$, $i_b$ and $i_c$, rotates opositely to the magneto motorial force $AW_{16}$, being given rise by the currents $i_r$, $i_s$ and $i_t$.

The rotations of $AW_{33}$ and $AW_{16}$ being opposite to each other is the effect of by example having connected the phases r with b, together with having connected phases s with a, as illustrated in fig. 19.

The in opposite direction rotating of the magneto motorial force $AW_{33}$ in regard to the magneto motorial force $AW_{16}$ may also be realized by a short circuit induction cage winding 38, being mounted in the slots 15 of the rotor 12 and the slots 32 of the rotor 30, of which a number of side by side bars 39, per pole pitch $_p$, are mounted with a tangential change over between the dynamosheets 31 and the dynamosheets 15, by which the other side by side bars 40 are mainly parallel with the shaft 13, as illustrated in fig. 19.

The short circuit cage winding 38 maybe electrically insulated in regard to the rotors 30 and 12.

The phases $r_{36}$, $s_{36}$ and $t_{36}$, and $r_{37}$, $s_{37}$ and $t_{37}$ are connected respectively to the inverters 18a and 18b, which are parallel connected, via the direct current connections, with the inverters 5a and 6a, as illustrated in fig. 1 and fig. 2 with regard to the inverters 5a, 6a and 18a.

**Claims**

1. Electro dynamic gear between a driving and a driven shaft by which one shaft is provided with a rotary current rotor and the other with a hollow interrotor, which both can rotate freely in a fixed rotary current stator, and by which means have been provided to transmit electrical power between the rotary current rotor and the stator,
   **characterised in that** the interrotor is constructed with as thin a wall as constructive rules permit, so only conducts magnetic flux radially,

2. Electro dynamic gear as claimed in claim 1,
   **characterised in that** the interrotor has a squirrel cage type winding,

3. Electro dynamic gear as claimed in claim 1,
   **characterised in that** it is subject to constructive rules of one electro dynamic machine,

4. Electro dynamic gear as claimed in claim 1,
   **characterised in that** the stator winding has two or more than two rotary current windings, being connected in parallel via inverter bridges

5. Electro dynamic gear as claimed in claim 1,
   **characterised in that** power transmission between both shafts is reversible,

6. Electro dynamic gear as claimed in claim 5,
   **characterised in that** angular speeds being transmitted can be reversed one another,

7. Electro dynamic gear as claimed in claim 1,
   **characterised in that** speed control is by controlled short circuiting.

8. Electrodynamic gear as claimed in claim 1 **characterised in that** a rotary current machine, its rotor added to the rotor and its stator added to the stator transmits electrical power between the rotor and the stator of this electrodynamic gear,

9. Electro dynamic gear as claimed in claim 8 **characterised in that** the rotor with the added rotor give rise to opposed rotating magneto motorial forces by means of one solid phase changing cage winding,

10. Electro dynamic gear as claimed in claim 1 and claim 8,
    **characterised in that** variable frequency rotary current and variable mechanical speed are transmitted with constant rotary input shaft speed.

EP 1 154 551 A2

- fig. 1 -

9

fig. 2

EP 1 154 551 A2

fig. 3

11

fig. 4

EP 1 154 551 A2

12

PWM

PWM

25 25 25 22 22 22 19z 19 19

26z 26y 26x 23w 23v 23u 20 20 20

30 30 30x 28w 28 28 29 29 29t

27z 27y 27x 24w 24v 24u 21 21 21

6a 5a 18a

$i_{16}$

18 18 18

17 17 17

$i_y$ z $i_w$ r s

V 6 w 16

Y $i_x$ $i_v$ $i_u$

5 t

X

U

EP 1 154 551 A2

~ fig. 5 ~

EP 1 154 551 A2

- fig. 6 -

14

- fig.7 -

15

- fig.8 -

PWM

PWM

fig. 9

EP 1 154 551 A2

EP 1 154 551 A2

- fig. 10 -

18

- fig. 11 -

anti-clockwise

clockwise

EP 1 154 551 A2

- fig. 12 -

20

- fig. 13 -

- fig. 14 -

PWM

PWM

EP 1 154 551 A2

- fig. 15 -

- fig. 16 -

- fig. 17´ -

*fig. 18*

EP 1 154 551 A2

26

EP 1 154 551 A2

fig. 19

27